# EUROPÄISCHE PATENTANMELDUNG

(11) **EP 0 869 596 A1**
(43) Veröffentlichungstag der Anmeldung: **07.10.1998**
(21) Anmeldenummer: 97117921.3
(22) Anmeldetag: 16.10.1997
(51) Int. Cl.: H02B 1/26

(54) **Starterkombination**

(30) Priorität: 04.04.1997 DE 29705966 U
(71) Anmelder: ESG Elektroschaltgeräte Görlitz GmbH, 02827 Görlitz (DE)
(72) Erfinder: Fiedler, Dirk, Dipl.-Ing., 02826 Görlitz (DE); Kurzinski, Hans, Dipl.-Ing., 02828 Görlitz (DE); Vondran, Günter, Dipl.-Ing., 02827 Görlitz (DE)
(74) Vertreter: Ilberg, Roland W., Dipl.-Ing.

(57) **Zusammenfassung**

Für eine Starterkombination aus einem Schutzschalter und einem Schütz soll das mechanische Verbindungsteil kleinbauend und damit kostengünstig, stabil, gut handhabbar sowie variabel in der Anwendung werden. Dies wird durch einen unterhalb des Anschlußraumes zwischen Schutzschalter (5) und Schütz (8) befindlichen Haltefuß (1) erreicht, dessen eine Seite am Gehäusefuß des Schutzschalters (5) und dessen gegenüberliegende Seite am Gehäusefuß des Schützes (8) form- und/ oder kraftschlüssig eingreift.

## Beschreibung

Die Erfindung betrifft eine Starterkombination aus einem Schutzschalter und einem elektrischen Schütz, die elektrisch und mechanisch miteinander verbunden sind.

Derartige Starterkombinationen werden zunehmend zum ferngesteuerten betriebsmäßigen Schalten elektrischer Motoren eingesetzt. Die Vorteile gegenüber herkömmlichen Installationen liegen in der vereinfachten Planung und Installation der Motorabzweige sowie in einer größeren Übersichtlichkeit, Flexibilität und Platzersparnis begründet. Die Starterkombination sorgt weiterhin für einen zuverlässigen thermischen Überlastschutz des Motors sowie einen gewissen Kurzschlußschutz. Mittels des Handbetätigungsorgans am Schutzschalter kann der Motor zusätzlich allpolig vom Strom getrennt bzw. wieder mit dem Netz verbunden werden.

Starterkombinationen können funktionell nicht nur als Direktstarter eingesetzt werden, sondern auch als Umkehrstarter, Stern-Dreieck-Starter, Mehrstufenstarter u.a.

Durch die Kombinierbarkeit der Komponenten werden aufwendige Sonderkonstruktionen mit vergleichbaren Leistungsparametern und Einsatzfeldern vermieden, was sich vorteilhaft auf die Produktionskosten und Logistik auswirkt, da der Bedarf an den vorgenannten Kombinationen nur einen Bruchteil des Bedarfs von Schützen oder Schutzschaltern als solchen ausmacht.

Es ist seit langem bekannt, zum Schutze von Motoren ein thermisches Überlastrelais mit einem Schütz zu kombinieren, indem das Überlastrelais direkt an das Schütz angebaut oder separat mit Hilfe eines Relaisträgers neben das Schütz auf eine Hutschiene aufgeschnappt wird. Der direkte Anbau erfolgt auf die Weise, daß ein hakenartiges mechanisches Befestigungsteil des Überlastrelais hinter Haltekonturen des Schützes einrastet und die direkt aus dem Überlastrelais herausführenden elektrischen Kontaktstifte an die elektrischen Klemmen des Schützes geklemmt werden. Durch Festschrauben der elektrischen Kontaktstifte wird die mechanische Verbindung der beiden Geräte unterstützt. Es entsteht eine genügend stabile Kombination, die z.B. mittels der Befestigungseinrichtung im Schützboden auf eine Hutschiene geschnappt werden kann. Nachteilig an einer solchen Kombination ist, daß mit dieser Kombination kein Vollschutz erreichbar ist.

Aus der EP 0 588 712 B1 ist ein plattenartiges Verbindungsteil zum Zusammenbauen eines Schutzschalters mit einem Schütz bekannt. Das mechanische Verbindungsteil trägt zugleich die elektrischen Leiter, deren Konaktstifte auf den zwei gegenüberliegenden Seiten des Verbindungsteils hervorstehen und direkt an Schütz und Schutzschalter angeschlossen werden können. Damit muß allerdings für jede Kombinationsvariante ein besonderes Verbindungsteil bereitgestellt werden. Auch gestaltet sich der Austausch eines Schützes von einer bereits installierten Kombination als sehr schwierig oder gar unmöglich, da das Schütz sowohl bei der Montage als auch Demontage nach unten abgekippt werden muß, um die elektrischen Kontaktstifte richtig zu handhaben. Die Kombination läßt sich ferner auf übliche Art nicht mehr von der Hutschiene entrasten, da die Entriegelungsvorrichtung des Schutzschalters vom Verbindungsteil überdeckt ist.

Ferner ist es bekannt, Schütz und Schutzschalter zum Zwekke der Bildung einer Kompakteinheit nebeneinander auf einem gemeinsamen Basisträger zu montieren und die elektrischen Verbindungen als gewöhnliche Verdrahtung auszuführen. Der in sich fertige Starter kann dann z.B. auf ein Stromschienenmodul, Hutschienenmodul oder Montageplattenmodul montiert werden (Produkt News, Sprecher + Schuh, Ausgabe 1/1994, S. 1 bis 8) . Als nachteilig erweist es sich hier, daß sich durch den Basisträger die Bauhöhe der Gerätekombination vergrößert. Auch sind z.B. für Hutschienenmontage zwei Hutschienen zur sicheren Befestigung notwendig. Durch die einzeln zu schaffenden elektrischen Verbindungen erhöht sich letztlich auch der interne Verdrahtungsaufwand.

Der Erfindung liegt die Aufgabe zugrunde, eine kompakte Starterkombination zu entwickeln, die variabel genug ist, um Geräte unterschiedlicher Bauhöhen kombinieren zu können, wie sie bei abweichenden Betätigungsspannungen, wie z.B. Wechselspannung und Gleichspannung, auftreten. Ferner soll die Art der elektrischen Verbindung Gestaltungsfreiräume belassen. Die mechanische Verbindung von Schütz und Schutzschalter soll nicht nur einfach und ausreichend fest sein, sondern auch eine kleinbauende Kombination herstellen, die auf nur eine Hutschiene aufgerastet zu werden braucht. Die Kombination soll sich wie üblich von der Hutschiene entrasten lassen und auch im installierten Zustand das Auswechseln eines Schützes zulassen.

Die Aufgabe wird erfindungsgemäß durch die im Anspruch 1 angegebenen Merkmale gelöst. Vorteilhafte Ausgestaltungen sind in den Unteransprüchen angegeben.

Die mechanische Verbindung von Schutzschalter und Schütz erfolgt demnach über einen unterhalb des Anschlußraumes zwischen Schutzschalter und Schütz befindlichen Haltefuß, dessen eine Seite am Gehäusefuß des Schutzschalters und dessen gegenüberliegende Seite am Gehäusefuß des Schützes form- und/oder kraftschlüssig eingreift. Hierdurch ergeben sich mehrere Vorteile. Einerseits wird ein freier Zugang zu den elektrischen Anschlußklemmen gewährleistet, was bedeutet, die elektrische Verbindung kann sowohl über Einzelleiter als auch über ein elektrisches Verbindungsteil erfolgen, in welchem die Verbindungsleitungen bereits vorkonfektioniert und vorpositioniert sind. Die Verbindung über Einzelleiter hat den Vorzug, daß mit einem Haltefuß verschieden hohe Schütze an den Schutzschalter montiert werden können, beispielsweise ein Gleichstrom- oder ein Wechselstromschütz. Weiterhin läßt sich die Starterkombination auch im installierten Zustand trennen, um beispielsweise ein Schütz auszutauschen, da ein Abkippen nach unten nicht notwendig ist. Gegenüber dem Aufbau auf einem Basisträger verkleinert dich die Bauhöhe und die Starterkombination wird insgesamt kompakter.

Die Erfindung soll anhand eines Ausführungsbeispiels und der zugehörigen Zeichnung näher erläutert werden. In der Zeichnung zeigt:
- Fig. 1a: einen Haltefuß nach der Erfindung von der Schutzschalterseite aus gesehen,
- Fig. 1b: den Haltefuß nach Fig. 1a von der Schützseite her gesehen,
- Fig. 2: eine montierte Starterkombination mit Einzelheiten der Befestigung im Schnitt und Einzelverdrahtung,
- Fig. 3: eine montierte Starterkombination mit Bausteinverdrahtung.
- Fig. 4: ein elektrisches Verbindungsteil.

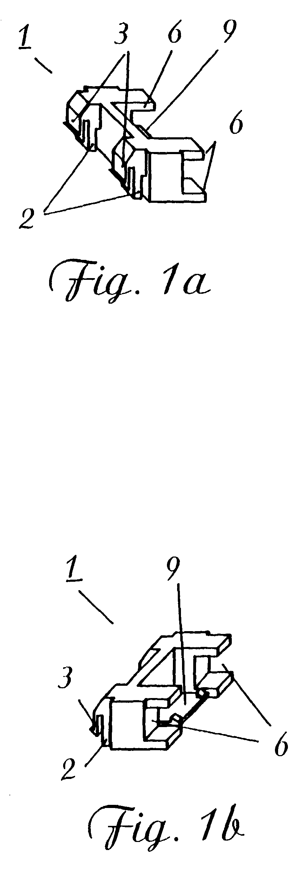

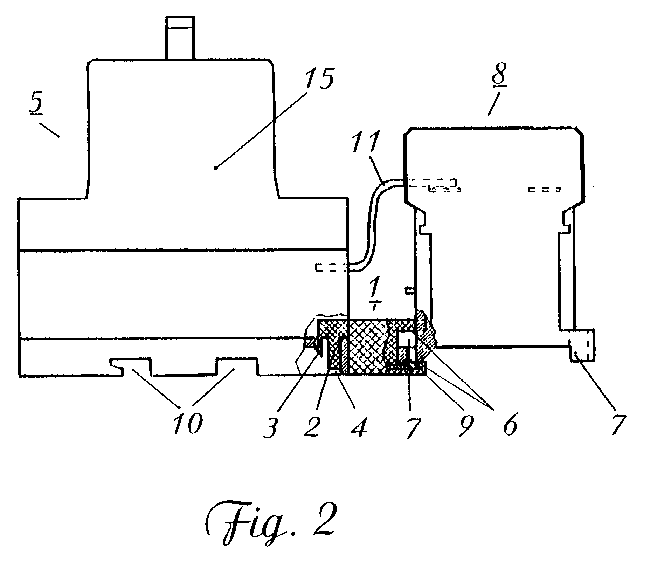

Ein Haltefuß 1 (Fig. 1a) von über die Gerätetiefe sich streckender Form und geringer Höhe und Breite besitzt auf der Schutzschalterseite an den Außenenden je einen Halte-und Führungshaken 2, welche zur Befestigungsebene der Starterkombination hin freigeschnitten sind. Außerdem sind Rastgabeln 3 vorgesehen, die gemeinsam mit den Halte- und Führungshaken 2 eine form- und kraftschlüssige Verbindung realisieren, sobald die Halte- und Führungshaken 2 und Rastgabeln 3 in die Befestigungslöcher 4 des Schutzschalters 5 (Fig. 2) eingegriffen haben.

Auf der Schützseite sind an den Haltefuß 1 (Fig. 1b), den Halte- und Führungshaken 3 gegenüberliegend, Haltegabeln 6 angeformt. Diese Haltegabeln 6 übergreifen die Befestigungsfüße 7 des Schützes 8 (Fig. 2) und halten damit das Schütz 8 mechanisch sicher fest. Um ein Herausgleiten des Schützes 8 aus den Haltegabeln 6 zu verhindern, rastet zusätzlich eine mittig zwischen den Haltegabeln 6 angeformte Rastzunge 9 hinter eine im Boden des Schützes 8 befindliche Kontur.

In Fig. 2 ist dargestellt, wie Schutzschalter 5 und Schütz 8 sicher über den Haltefuß 1 miteinander mechanisch verbunden sind. Oberhalb des Haltefußes 1 verbleibt genügend Raum zur Herstellung der elektrischen Verbindungen 11, die nach Fig. 2 aus flexiblen oder starren Einzelleitern hergestellt werden. Die Starterkombination wird werkseitig mechanisch und elektrisch verbunden und damit anschlußfertig ausgeliefert und braucht vom Anwender nur noch mittels des nicht näher im Boden 10 des Schutzschalters 5 angeordneten Klemmschiebers auf eine Hutschiene der elektrischen Verteilung geschnappt werden. Das Schütz 8 kann in vorteilhafter Weise auch innerhalb der Verteilung gewechselt werden, was beispielsweise bei verschweißten Kontakten infolge eines Kurzschlußstromes über 50 kA notwendig wird. Solche hohen Kurzschlußströme können unter Umständen dann auftreten, wenn auf Vorsicherungen zum Motorabzweig verzichtet wurde. Weiterhin sind auch Schütze 8' mit abweichenden Bauhöhen ohne Mehraufwand ansetzbar.

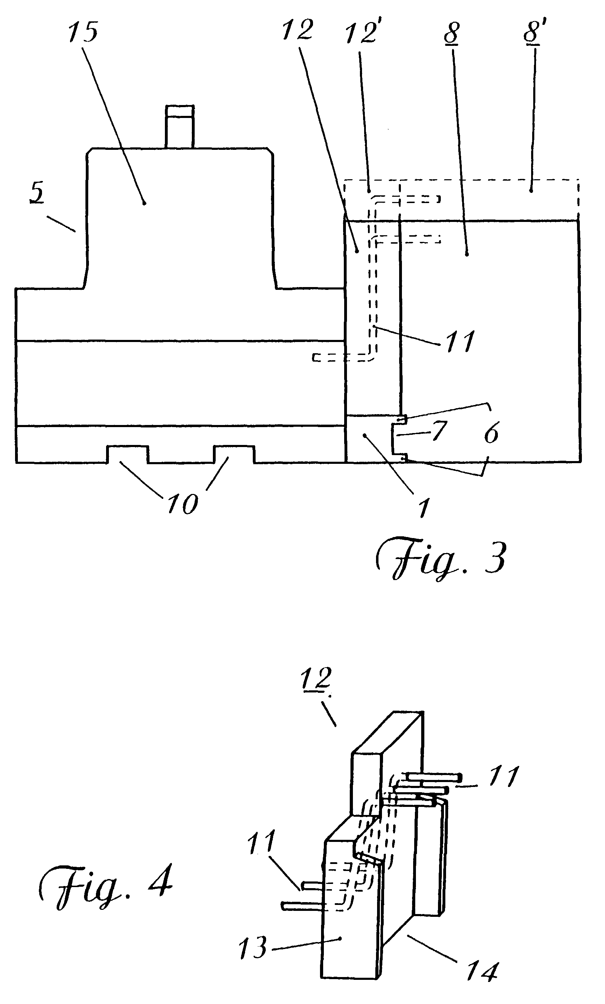

In Fig. 3 ist gezeigt, daß anstelle der elektrischen Einzelleiterverdrahtung zwischen Schutzschalter 5 und Schütz 8 auch ein elektrisches Verbindungsteil 12 (Fig. 4), bestehend aus einem Träger 13 aus Isolierstoff und den darin fixierten elektrischen Verbindungen 11, eingesetzt werden kann, wodurch sich der Verdrahtungsaufwand etwas verringert. Allerdings müssen die Verbindungsteile 12, 12' (Fig. 3) zum jeweils anzuschließenden Schütz 8 passen, was eine besondere Herstellung und Lagerhaltung für jede Schützhöhe mit sich bringt.

Fig. 4 zeigt ein elektrisches Verbindungsteil 12 von der Schützseite. Da der Träger 13 nicht die mechanischen Halteeigenschaften zwischen Schutzschalter 5 und Schütz 8 unterstützen muß, kann er prinzipiell beliebig gestaltet sein und z.B. Freischneidungen 14 für ein Werkzeug aufweisen, um einen Klemmschieber im Boden 10 des Schutzschalters 5 für die Hutschienenbefestigung zu lösen. Die äußeren Konturen des Verbindungsteils 12 lassen ferner ein nachträgliches Einbauen oder Auswechseln von Zusatzbaugruppen unter die Abdeckkappe 15 des Schutzschalters zu, wie Meldeschalter, Unterspannungsauslöser, Arbeitsstromauslöser, da die Abdeckkappe 15 unbehindert abgehoben werden kann.

### Bezugszeichen

- Haltefuß: 1
- Halte- und Führungshaken: 2
- Rastgabel: 3
- Befestigungsloch: 4
- Schutzschalter: 5
- Haltegabel: 6
- Befestigungsfuß: 7
- Schütz: 8, 8'
- Rastzunge: 9
- Boden des Schutzschalters: 10
- elektrische Verbindung: 11
- elektr. Verbindungsteil: 12, 12'
- Träger: 13
- Freischneidungen: 14
- Abdeckkappe: 15

## Patentansprüche

1. Starterkombination aus einem Schutzschalter und einem Schütz, die mechanisch über ein Verbindungsteil miteinander verbunden sind, **dadurch gekennzeichnet**, daß die Verbindung über einen unterhalb des Anschlußraumes zwischen Schutzschalter (5) und Schütz (8) befindlichen Haltefuß (1) erfolgt, dessen eine Seite am Gehäusefuß des Schutzschalters (5) und dessen gegenüberliegende Seite am Gehäusefuß des Schützes (8) form- und/oder kraftschlüssig eingreift.

2. Starterkombination nach Anspruch 1, **dadurch gekennzeichnet**, daß der Haltefuß (1) auf der dem Schutzschalter (5) zugewandten Seite zwei äußere Halte- bzw. Führungshaken (2) mit zugeordneten Rastgabeln (3) aufweist, die von oben in die angrenzenden Befestigungslöcher (4) des Schutzschalters (5) eingreifen und einrasten und daß der Haltefuß (1) auf der dem Schütz (8) zugewandten Seite zwei äußere Haltegabeln (6) und mindestens eine dazwischenliegende Rastzunge (9) aufweist, wobei die Haltegabeln (6) die angrenzenden Befestigungsfüße (7) des Schützes (8) übergreifen und die Rastzunge (9) hinter eine Bodenkontur des Schützes (8) rastet.

3. Starterkombination nach Anspruch 1 oder 2, **dadurch gekennzeichnet**, daß am Haltefuß (1) eine Freisparung zum Durchgriff eines Schraubendrehers o.ä. für die Entriegelung der Starterkombination von einer Hutschiene vorgesehen ist.

4. Starterkombination nach Anspruch 1 oder 2, **dadurch gekennzeichnet**, daß der Haltefuß (1) aus hochfestem, federelastischen Formstoff besteht.

5. Starterkombination nach einem oder mehreren der vorhergehenden Ansprüche, **dadurch gekennzeichnet**, daß in den Anschlußraum zwischen Schutzschalter (5) und Schütz (8) ein elektrisches Verbindungsteil (12), bestehend aus einem Träger (13) aus Isolierstoff und den darin fixierten Verbindungsleitungen (11), einsetzbar ist.
